# EUROPEAN PATENT SPECIFICATION

(11) **EP 4 397 831 B1**
(45) Date of publication and mention of the grant of the patent: **24.06.2026**
(21) Application number: 23150253.5
(22) Date of filing: 04.01.2023
(51) Int. Cl.: E05F 11/54, E05F 13/00

(54) **ASSISTING SYSTEM FOR CLOSING A DRIVER S DOOR IN A VEHICLE**
HILFSSYSTEM ZUM SCHLIESSEN EINER FÜHRERTÜR IN EINEM FAHRZEUG
SYSTÈME D'ASSISTANCE POUR LA FERMETURE D'UNE PORTE DE CONDUCTEUR DANS UN VÉHICULE

(43) Date of publication of application: 10.07.2024
(73) Proprietor: VOLVO TRUCK CORPORATION, 405 08 Göteborg (SE)
(72) Inventor: L, Smruthi, 560059 BANGALORE (IN); Behera, Anjali, 560093 BANGALORE (IN)
(74) Representative: Lavoix

(56) References cited:
- FR-A1- 2 835 872
- US-A- 3 206 186
- US-A- 5 002 331
- US-A- 5 549 348

## Description

### Technical Field

The disclosure relates generally to ergonomics for a driver in a vehicle, especially in a heavy-duty vehicle. In particular aspects, the disclosure relates to an assisting system for closing a driver's door in a vehicle, which system is for helping a driver to close the driver's door and to a heavy-duty vehicle comprising such an assisting system and to a method for closing a driver's door with such an assisting system. The disclosure can be applied in heavy-duty vehicles, such as trucks, buses, and construction equipment. Although the disclosure may be described with respect to a particular vehicle, the disclosure is not restricted to any particular vehicle.

### Background Art

The heavy-duty vehicles, for example the trucks, are huge vehicles. When the driver is seated inside the cab of such a heavy-duty vehicle, it becomes essential to ensure that the driver is seated ergonomically to reach all the necessary components comfortably.

Ergonomics is a stream of engineering which deals with human and machine interaction, and it helps maximize the efficiency of both the human and the machine. One of the topics of ergonomics is the reachability.

In heavy-duty vehicles, there may be a problem of reachability of the inner door handle when the driver is seated in his/her driving position and especially when the door is open. This problem gets worse when the person seated in the driver seat is of a short stature. In such situations, the person would have to partially stand and bend excessively in order to reach the door handle.

There have been several attempts to resolve this reachability problem. FR2835872A1 discloses a door closing mechanism controlled by a clutch pedal. US5549348A discloses another door closer mechanism for a vehicle. Automated doors have been developed. They are using electric motors to serve this purpose. Another solution is to replace the normal door with a sliding door system, which affects the aerodynamics of the vehicle as well as its quality impression.

### Summary

This invention improves the situation.

According to the invention, it is provided an assisting system for closing a driver's door in a vehicle, especially in a heavy-duty vehicle such as a truck, comprising:
a pedal movable between a high position and a low position,
a door check strap arranged in the driver's door and configured to be able to act on a degree of opening of the driver's door,
a connecting cable for linking the pedal to the door check strap,
the door check strap being configured such that when the pedal moves from the high position to the low position, the connecting cable pulls part of the door check strap so that the driver's door moves from a maximum open position to a closed position or to an intermediate open position.

The invention may seek to help the driver close the driver's door. The invention provides a permanent solution for the reachability problem of the door handle for the driver. A technical benefit may include better ergonomics for the driver.

According to the invention, the door check strap comprises a metal plate fixedly secured to the driver's door and linked to the connecting cable. The door check strap comprises a stalk having a proximal end and a distal end. The metal plate is movable relative to the stalk, so that when the pedal passes from the high position to the low position, the connecting cable pulls the metal plate, initially close to the distal end, along the stalk away from the distal end towards the proximal end.

In such case, the proximal end of the stalk may comprise a loop to be attached to a vehicle's body and rotative relative to the stalk, notably rotative about an axis substantially perpendicular to the stalk.

A technical benefit may include the use of an existing door check strap which is adapted to make the assisting system. The function of a door check strap is to avoid the door from closing in as soon as it is opened. It acts as a door stopper. Due to the way the doors are designed, the doors close in slowly as soon as they are opened. The door check strap usually stops this from happening and allows the door to close only when the occupant pulls in on the door handle. The use of an existing door check strap may reduce the costs of implementation of the disclosure.

In some examples, the stalk is arranged so as to enter and lodge into an empty slot inside the driver's door when the metal plate is pulled away from the distal end towards the proximal end.

The metal plate may have an opening through which the stalk passes. In that case, the door check strap comprises for example rollers arranged in the opening between the stalk and the metal plate. Such rollers help the door check strap operate.

The pedal may be fixed at an end of a pivoting element pivotable around a pivot axis, especially a pivot central axis which is perpendicular to the pivoting element. In this case, the connecting cable may be fixed at the other end of the pivoting element.

The stalk may comprise a hollow region so that the connecting cable may enter the stalk through the hollow region from one end and is advantageously attached to the metal plate. In such case, the connecting cable is for example guided inside the stalk from one proximal end thereof opposed to the distal end thereof.

The system may be configured such that the connecting cable remains in tension whatever the position of the driver's door and of the pedal.

The vehicle comprises a cab having a floor and an acceleration pedal, preferably near said pedal. The pedal has for example a height from the floor in the high position, when the driver's door is in the maximum open position, equal to a+h, the height of the acceleration pedal, in an initial position, from the floor being for example equal to a.

In this case, the pedal, in the low position thereof, when the driver's door is in the closed position or in said intermediate open position, may have a height equal to a.

The pedal may be a dead pedal. A dead pedal is an existing component used inside of a heavy-duty vehicle, such as a truck, which served no particular purpose. It is installed inside the heavy-duty vehicle only to support the foot of the driver so that there is symmetry. One of the driver's feet is rested on the acceleration pedal whereas the other foot is not used to control anything. This is because, unlike in cars, the clutch is not controlled by any pedal in the trucks, so the other foot of the driver is free. To ensure that the driver feels comfortable to place his foot while he is driving, there is provided a dead pedal installed in the heavy-duty vehicle to support his foot which is unoccupied. The added support dead pedals provide is real. By providing an ergonomic resting spot for the left foot exactly where it's needed, stress is reduced on muscles and nerves in the leg, knee, and back. On long trips or everyday commutes, this increases driver comfort level for just about everyone. If he/she is suffering from back or knee issues, a dead pedal can really make a difference. Hence, before the present invention, the dead pedal was a rigid body and did not help in operating anything. In the present example of the invention, the existing dead pedal is utilized to solve the problem of reachability of the door handle as explained hereabove.

In such case, the invention provides the most feasible solution for the reachability problem by utilizing available components, such as the dead pedal and the door check strap, and with the minimum cost. This does not require any addition of external components or change in the structure of the heavy-duty vehicle, especially the truck.

The connecting cable may be chosen in the group consisting of a cable, a metal rod, a stiff object. The connecting cable may be rigid or flexible.

The assisting system is preferably configured so that when the driver's door is closed, the pedal is moved from the high position to the low position and when the driver's door is opened, the pedal is moved from the low position to the high position. When the door is open, the driver presses the pedal from the high position to the low position so that the door is closed. When the door is closed, the driver uses the door handle to open the door and the pedal automatically, thanks to the connecting cable, moves from the low position to the high position. When the driver is outside the truck and he closes the door, the dead pedal passes from the high position to the low position and then, when the driver wants to enter the truck, he opens the door and the dead pedal moves into the high position.

According to an embodiment of the invention, there is provided a heavy-duty vehicle, such as a truck, a bus, and a construction equipment, comprising a driver's door and the assisting system as described above, in all combinations.

According to an example not forming part of the invention, there is provided a method for closing a driver's door with the assisting system as described hereabove, in all combinations. The method comprises the following step: the door being open, pressing on the pedal, initially in the high position, to the low position, thereby making the connecting cable pull on the part of the door check strap, notably the metal plate, so as to move the driver's door from the maximum open position to a closed position or to an intermediate open position.

The force applied on the pedal can bring the door to the closed position, but the effort applied on the pedal might not be high enough to lock the door shut and only bring it to the intermediate open position. Hence, when the door is almost at the closed position, in the intermediate open position, where the driver can reach the door handle very easily, the driver can pull the door shut.

Additional features and advantages are disclosed in the following description, claims, and drawings, and in part will be readily apparent therefrom to those skilled in the art or recognized by practicing the disclosure as described herein.

### Brief Description of Drawings

With reference to the appended drawings, below follows a more detailed description of the invention cited as examples.
[Fig. 1] is a schematic side view of an exemplary truck according to one example.
[Fig. 2] is a schematic side view of an exemplary assisting system according to one example, shown with the pedal in the high position.
[Fig. 3] is a schematic side view of the assisting system of Figure 2, shown with the pedal in the low position.
[Fig. 4] is a schematic view of the pedals inside the truck of figure 1.
[Fig. 5] is an isolated schematic view of a door check strap used in an exemplary assisting system according to one example.

### Description of Embodiments

Aspects set forth below represent the necessary information to enable those skilled in the art to practice the disclosure.

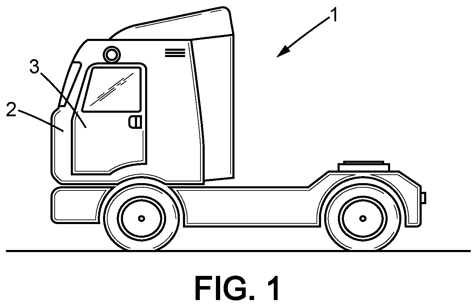

Figure 1 is an exemplary truck 1 according to one example forming part of the invention, comprising an assisting system for closing a driver's door. The truck comprises a cab 2 and a driver's door 3. The disclosure is not limited to a truck but also to other vehicles, especially heavy-duty vehicles, such as buses and construction equipment.

In heavy-duty vehicles, there may be a problem of reachability of the inner door handle when the driver is seated in his/her driving position and especially when the door is open. This problem gets worse when the person seated in the driver seat is of a short stature. In such situations, the person would have to partially stand and bend excessively in order to reach the door handle.

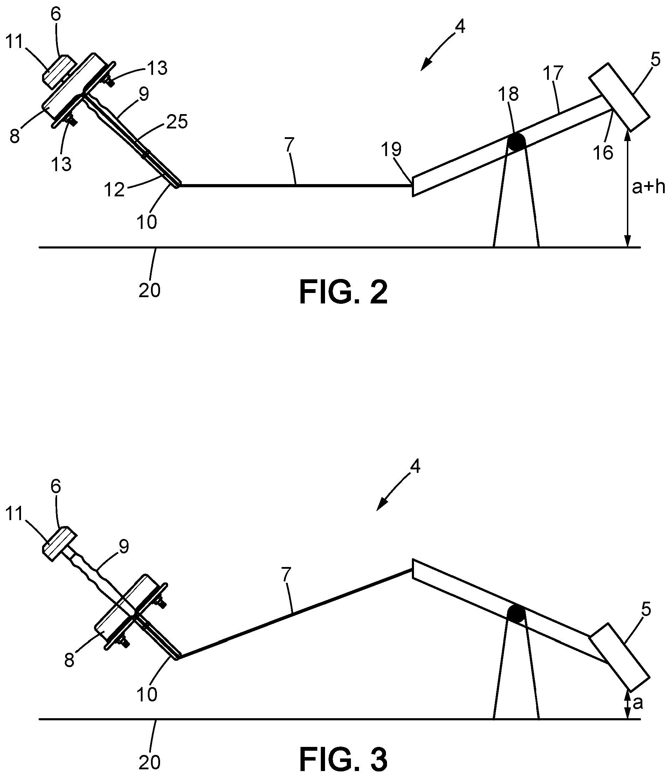

The truck 1 comprises an assisting system 4 shown in Figures 2 and 3 for resolving this problem and helping the driver close the driver's door 3. The assisting system 4 for closing a driver's door in the truck 1 comprises a pedal 5 movable between a high position shown in Figure 2 and a low position shown in Figure 3. The assisting system 4 also comprises a door check strap 6 arranged in the driver's door 3 and configured to be able to act on a degree of opening of the driver's door 3. The assisting system 4 also comprises a connecting cable 7 for linking the pedal 5 to the door check strap 6. The door check strap 6 is configured such that when the pedal 5 moves from the high position to the low position, i.e. from the position shown in Figure 2 to the position shown in Figure 3, the connecting cable 7 pulls part of the door check strap 6 so that the driver's door 3 moves from a maximum open position to a closed position or to an intermediate open position.

The example provides a permanent solution for the reachability problem of the door handle for the driver. This leads to better ergonomics for the driver.

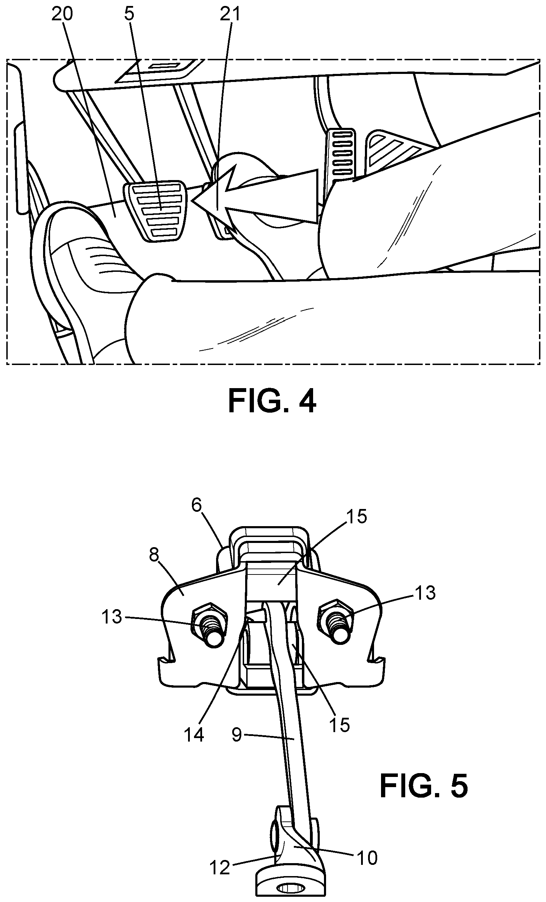

In this example, the door check strap 6, shown in isolation in Figure 5, comprises a metal plate 8 fixedly secured to the driver's door 3, thanks to fixation elements 13, such as screws or bolts, the metal plate 8 being also linked to the connecting cable 7. The door check strap 6 also comprises a stalk 9 having a proximal end 10 and a distal end 11. In such case, the metal plate 8 is movable relative to the stalk 9, so that when the pedal 5 passes from the high position to the low position, the connecting cable 7 pulls the metal plate 8, initially close to the distal end 11, along the stalk 9 away from the distal end 11 towards the proximal end 10. The metal plate 8 extends perpendicularly to the stalk 9.

In this example, the proximal end 10 of the stalk 9 comprises a loop 12 attached to a vehicle's body, in particular the cab 2. The loop 12 is rotative relative to the stalk 9, notably rotative about an axis substantially perpendicular to the stalk 9.

The use of an existing door check strap 6 is adapted to make the assisting system 4. The usual function of a door check strap is to avoid the door from closing in as soon as it is opened. It acts as a door stopper. Due to the way the doors are designed, the doors close in slowly as soon as they are opened. The door check strap usually stops this from happening and allows the door to close only when the occupant pulls in on the door handle. The use of an existing door check strap may reduce the costs of implementation of the disclosure.

In this example, although not shown in order to preserve the clarity of the drawing, the driver's door 3 comprises an empty slot and the stalk 9 is arranged so as to enter and lodge into the empty slot inside the driver's door 3 when the metal plate 8 is pulled away from the distal end 11 towards the proximal end 10.

The metal plate 8 has an opening 14 through which the stalk 9 passes. The door check strap 6 comprises rollers 15, two in number in this example, arranged in the opening 14 between the stalk 9 and the metal plate 8 as best shown in Figure 5. Such rollers 15 help the door check strap 6 operate.

The pedal 5 is fixed at an end 16 of a pivoting element 17 pivotable around a pivot axis 18, in this example a pivot central axis which is perpendicular to the pivoting element 17. In this example, the connecting cable 7 is fixed at the other end 19 of the pivoting element 17.

In this example, the stalk 9 comprises a hollow region 25 so that the connecting cable 7 enters the stalk 9 through the hollow region 25 from one end and is attached to the metal plate 8. The connecting cable 7 is in this example guided inside the stalk 9, inside the hollow region 25 extending from the proximal end 10 opposed to the distal end 11. The connecting cable 7 is attached to the metal plate 8. In this example, the hollow region 25 extends from the proximal end 10 to an end being close to the distal end 11.

The assisting system 4 is configured such that the connecting cable 7 remains in tension whatever the position of the driver's door 3 and of the pedal 5. The connecting cable 7 remains stretched to its maximum extend. The connecting cable 7 is in this example a flexible cable, but it may also be a rigid cable, such as a metal rod, a stiff object, without departing from the scope of the disclosure. This is advantageous for the assembly constraints and for the way of placing the connecting cable 7 inside the cab 2.

As best shown in Figure 4, the cab 2 has a floor 20 and an acceleration pedal 21, near the pedal 5. The pedal 5 has a height equal to a+h from the floor 20 in the high position, when the driver's door 3 is in the maximum open position. The height of the acceleration pedal 21, in an initial position, from the floor 20 is equal to a. The pedal 5, in the low position, when the driver's door 3 is in the closed position or in the intermediate open position, has a height equal to a.

The pedal 5 is in this example the existing dead pedal.

Step wise functioning of the assisting system 4 is listed below.

The dead pedal 5 is placed inside the cab 2 to provide a resting support to the driver's foot. This is necessary because, the driver is operating the acceleration pedal 21 with one foot, therefore there is an angle formed between his feet and the cab floor 20 where the heel of the driver is the point of contact with the cab floor 20. The other foot of the driver should be placed the same way with the same angle to the cab floor 20 in order to maintain symmetry and this would be more comfortable for the driver. To make this happen there is a dead pedal 5 installed inside the cab 2. This helps the driver place his other feet at the angle exactly like the angle his feet on the acceleration pedal 21, when he is not pressing down the acceleration pedal 21, i.e. in the initial position of the acceleration pedal 21.

If the height of the acceleration pedal 21 from the cab floor is 'a' cm, when it is in its initial position, then the initial position of the dead pedal 5 is 'a+h' cm from the cab floor. i.e., the dead pedal 5 is at a raised initial position when compared to the acceleration pedal 21.

The final position or the completely pressed down dead pedal 5 is at the same height from the cab floor 20 than the initial position of the acceleration pedal 21.

Thus, when the dead pedal 5 is at its initial position ('a+h' cm from cab floor 20), the person can press down the dead pedal 5 in order to close the door 3.

In the initial position of the dead pedal 5 and the door check strap 6, the door 3 is open to its maximum extend, in the maximum open position.

When the door 3 is in this maximum open position, the metal plate 8 is farthest away from the loop 12 of the door check strap 6. When the door 3 closes, the metal plate 8 moves closer to the loop 12. This movement takes place with the help of the rollers 16. Hence, the assisting system 4 is activated when the driver initially steps on the dead pedal 5 and pushes it down from the initial position (high position) which is 'a+h' cm above the cab floor 20, to the final position (low position) which is 'a' cm above the cab floor 20.

The final position of the dead pedal, which is 'a' cm above the cab floor 20, is the same as the initial position of the acceleration pedal 21. This ensures that when the door 3 is closed, throughout the driving period, both the dead pedal 5 and the acceleration pedal 21 are at the same height.

When the occupant pushes down the dead pedal 5 from 'a+h' cm height to the 'a' cm height from the cab floor 20, it pulls the connecting cable 7 attached to the pivoting element 17 at the other end thereof.

This happens because there of the pivot point to which the dead pedal 5 is attached to, and dead pedal 5 moves vertically about this pivot point.

Hence, when one end of the pivoting element is moved down, here the dead pedal 5, the other end, here the end to which the connecting cable 7 is attached, moves up and this in turn pulls the connecting cable 7 towards the occupant.

One end of the connecting cable 7 is attached to the pivoting element and the other end of the connecting cable 7 is attached to the metal plate 8. The stalk 9 of the door check strap 6 is hollow, so the cable enters the stalk 9 through the hollow region from one end and is attached to the metal plate of the door check strap 6. The connecting cable 7 in turn pulls the metal plate 8 of the door check strap 6. This finally brings the metal plate 8 closer to the loop 12 of the door check strap 6, which in turn closes the door.

The length of the connecting cable 7 can be determined in such a way that even the dead pedal 5 moves from 'a+h' cm to 'a' cm, the door 3 should move from the maximum open position to the closed position.

Once the door 3 is finally closed, the dead pedal 5 is at the same height as that of the acceleration pedal 21. Since the door 3 is closed and there is no way that the metal plate 8 of the door check strap 6 can move, it holds the dead pedal 5 in the final, i.e. low, position. This enables the dead pedal 5 to act as a stationary object.

When the occupant must again open the door 3, since the metal plate 8 moves back away from the loop 12, the dead pedal 5 goes back to its initial, i.e. high, position.

The assisting system 4 is preferably configured so that when the driver's door 3 is closed, the pedal 5 is moved from the high position to the low position and when the driver's door 3 is opened, the pedal 5 is moved from the low position to the high position. When the door 3 is open, the driver presses the pedal 5 from the high position to the low position so that the door closes, thanks to the assisting system 4. When the door is closed, the driver uses the door handle to open the door 3 and the pedal 5 automatically, thanks to the connecting cable 7, moves from the low position to the high position. When the driver is outside the truck and he closes the door, the dead pedal passes from the high position to the low position and then, when the driver wants to enter the truck, he opens the door, and the dead pedal moves into the high position.

When the occupant, who generally is the driver, initially takes his seat in the truck 1, he can see that the dead pedal 5 is placed higher than the acceleration pedal 21. This is a stimulus for him to press on the dead pedal 5 to bring it down to the level of acceleration pedal 21. This is a benefit of this assisting system: no new behavioral change is required to make this into a habit.

When the driver presses down the dead pedal 5 to the level of acceleration pedal 21, the door 3 moves closer to him according to the assisting system 4 described above.

The force applied on the dead pedal 5 normally brings the door 3 to the closed position, but the effort applied on the dead pedal 5 might not be high enough to lock the door 3 shut.

Hence, when the door 3 is almost at the closed position, in an intermediate open position, where the driver can reach the door handle very easily, the driver can pull the door 3 shut.

Once the door 3 is shut, the dead pedal 5 acts as a stable component, it doesn't move. Its motion is restricting due to the connecting cable 7 which always remains in tension.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made within the scope of the present invention. In the drawings and specification, there have been disclosed aspects for purposes of illustration only and not for purposes of limitation, the scope of the invention being set forth in the following claims.

## Claims

1. An assisting system (4) for closing a driver's door (3) in a vehicle (1), especially in a heavy-duty vehicle, comprising:
a pedal (5) movable between a high position and a low position;
a door check strap (6) arranged in the driver's door (3) and configured to act on a degree of opening of the driver's door (3); and
a connecting cable (7) for linking the pedal (5) to the door check strap (6),
**characterized in that**
the door check strap (6) comprises:
a metal plate (8) fixedly secured to the driver's door (3) and linked to the connecting cable (7); and
a stalk (9) having a proximal end (10) and a distal end (11), wherein the metal plate (8) is movable relative to the stalk (9),
the door check strap (6) being configured such that when the pedal (5) moves from the high position to the low position, the connecting cable (7) pulls the metal plate (8), initially close to the distal end (11), along the stalk (9) away from the distal end (11) towards the proximal end (10) whereby the driver's door (3) moves from a maximum open position to a closed position or to an intermediate open position.

2. The system according to claim 1, wherein the proximal end (10) of the stalk (9) comprises a loop (12) to be attached to a vehicle's body and rotative relative to the stalk (9), notably rotative about an axis substantially perpendicular to the stalk (9).

3. The system according to claim 1 or 2, wherein the stalk (9) is arranged so as to enter and lodge into an empty slot inside the driver's door (3) when the metal plate (8) is pulled away from the distal end (11) towards the proximal end (10).

4. The system according to any of claims 1 to 3, wherein the metal plate (8) has an opening (14) through which the stalk (9) passes, the door check strap (6) comprising rollers (15) arranged in the opening (14) between the stalk (9) and the metal plate (8).

5. The system according to any of claims 1 to 4, wherein the stalk (9) comprises a hollow region (25) so that the connecting cable (7) enters the stalk (9) through the hollow region (25) from one end and is attached to the metal plate (8).

6. The system according to any of the preceding claims, wherein the pedal (5) is fixed at an end (16) of a pivoting element (17) pivotable around a pivot axis (18) and the connecting cable (7) is fixed at the other end (19) of the pivoting element (17).

7. The system according to any of the preceding claims, configured such that the connecting cable (7) remains in tension whatever the position of the driver's door (3) and of the pedal (5).

8. The system according to any of the preceding claims, wherein the pedal (5) has a height from the floor (20) of a cab (2) of the vehicle (1), in the high position, when the driver's door (3) is in the maximum open position, equal to *a+h,* the height of an acceleration pedal (21) of the vehicle (1), in an initial position, from the floor (20) being equal to a.

9. The system according to claim 8, wherein the pedal (5), in the low position thereof, when the driver's door (3) is in the closed position or in said intermediate open position, has a height equal to a.

10. The system according to any of the preceding claims, wherein the pedal (5) is a dead pedal.

11. The system according to any of the preceding claims, wherein the connecting cable (7) is chosen in the group consisting of a rigid cable, a flexible cable, a metal rod, a stiff object.

12. The system according to any of the preceding claims, wherein the assisting system (4) is configured so that when the driver's door (3) is closed, the pedal (5) is moved from the high position to the low position and when the driver's door (3) is opened, the pedal (5) is moved from the low position to the high position.

13. A heavy-duty vehicle (1), such as a truck, a bus, and a construction equipment, comprising a driver's door (3) and the assisting system (4) according to any of the preceding claims.

## Patentansprüche

1. Hilfssystem (4) zum Schließen einer Fahrertür (3) in einem Fahrzeug (1), insbesondere in einem Schwerlastfahrzeug, umfassend:
ein Pedal (5), das zwischen einer oberen Position und einer unteren Position bewegbar ist;
einen in der Fahrertür (3) angeordneten Türfeststeller (6), der konfiguriert ist, um auf einen Öffnungsgrad der Fahrertür (3) einzuwirken; und
ein Verbindungskabel (7) zum Verbinden des Pedals (5) mit dem Türfeststeller (6),
**dadurch gekennzeichnet, dass**
der Türfeststeller (6) Folgendes umfasst:
eine Metallplatte (8), die fest an der Fahrertür (3) befestigt und mit dem Verbindungskabel (7) verbunden ist;
einen Schaft (9), der ein proximales Ende (10) und ein distales Ende (11) aufweist, wobei die Metallplatte (8) in Bezug auf den Schaft (9) bewegbar ist,
wobei der Türfeststeller (6) konfiguriert ist, sodass, wenn sich das Pedal (5) von der oberen Position zur unteren Position bewegt, das Verbindungskabel (7) die anfangs nahe dem distalen Ende (11) befindliche Metallplatte (8) entlang des Schafts (9) von dem distalen Ende (11) weg in Richtung des proximalen Endes (10) zieht, wodurch sich die Fahrertür (3) von einer maximalen Offenstellung zu einer geschlossenen Stellung oder zu einer mittleren Offenstellung bewegt.

2. System nach Anspruch 1, wobei das proximale Ende (10) des Schafts (9) eine Schlaufe (12) zum Befestigen an einer Fahrzeugkarosserie aufweist, die in Bezug auf den Schaft (9) drehbar ist, insbesondere drehbar um eine Achse, die im Wesentlichen senkrecht zum Schaft (9) ist.

3. System nach Anspruch 1 oder 2, wobei der Schaft (9) angeordnet ist, um in einen leeren Schlitz innerhalb der Fahrertür (3) einzutreten und darin aufgenommen zu werden, wenn die Metallplatte (8) von dem distalen Ende (11) weg in Richtung des proximalen Endes (10) gezogen wird.

4. System nach einem der Ansprüche 1 bis 3, wobei die Metallplatte (8) eine Öffnung (14) aufweist, durch die der Schaft (9) verläuft, wobei der Türfeststeller (6) Rollen (15) umfasst, die in der Öffnung (14) zwischen dem Schaft (9) und der Metallplatte (8) angeordnet sind.

5. System nach einem der Ansprüche 1 bis 4, wobei der Schaft (9) einen hohlen Bereich (25) umfasst, sodass das Verbindungskabel (7) durch den hohlen Bereich (25) von einem Ende in den Schaft (9) eintritt und an der Metallplatte (8) befestigt ist.

6. System nach einem der vorherigen Ansprüche, wobei das Pedal (5) an einem Ende (16) eines Schwenkelements (17) befestigt ist, das um eine Schwenkachse (18) schwenkbar ist, und das Verbindungskabel (7) an dem anderen Ende (19) des Schwenkelements (17) befestigt ist.

7. System nach einem der vorherigen Ansprüche, das konfiguriert ist, sodass das Verbindungskabel (7) unabhängig von der Stellung der Fahrertür (3) und des Pedals (5) gespannt bleibt.

8. System nach einem der vorherigen Ansprüche, wobei das Pedal (5) in der oberen Position, wenn die Fahrertür (3) in der maximalen Offenstellung ist, eine Höhe von dem Boden (20) einer Kabine (2) des Fahrzeugs (1) aufweist, die gleich a+h ist, wobei die Höhe eines Fahrpedals (21) des Fahrzeugs (1) in einer Ausgangsposition von dem Boden (20) gleich a ist.

9. System nach Anspruch 8, wobei das Pedal (5) in dessen unterer Position, wenn die Fahrertür (3) in der geschlossenen Stellung oder in der genannten mittleren Offenstellung ist, eine Höhe aufweist, die gleich a ist.

10. System nach einem der vorherigen Ansprüche, wobei das Pedal (5) eine Fußstütze ist.

11. System nach einem der vorherigen Ansprüche, wobei das Verbindungskabel (7) ausgewählt ist aus der Gruppe, bestehend aus einem starren Kabel, einem flexiblen Kabel, einer Metallstange, einem steifen Gegenstand.

12. System nach einem der vorherigen Ansprüche, wobei das Hilfssystem (4) konfiguriert ist, sodass, wenn die Fahrertür (3) geschlossen wird, das Pedal (5) von der oberen Position zur unteren Position bewegt wird, und wenn die Fahrertür (3) geöffnet wird, das Pedal (5) von der unteren Position zur oberen Position bewegt wird.

13. Schwerlastfahrzeug (1), wie beispielsweise ein Lastkraftwagen, ein Bus und eine Baumaschine, umfassend eine Fahrertür (3) und das Hilfssystem (4) nach einem der vorherigen Ansprüche.

## Revendications

1. Système d'assistance (4) pour la fermeture d'une porte de conducteur (3) dans un véhicule (1), en particulier dans un véhicule lourd, comprenant :
une pédale (5) mobile entre une position haute et une position basse ;
une sangle d'arrêt de porte (6) agencée dans la porte de conducteur (3) et configurée pour agir sur un degré d'ouverture de la porte de conducteur (3) ; et
un câble de raccordement (7) pour relier la pédale (5) à la sangle d'arrêt de porte (6), **caractérisé en ce que** :
la sangle d'arrêt de porte (6) comprend :
une plaque métallique (8) fixée, de manière fixe, à la porte de conducteur (3) et reliée au câble de raccordement (7) ; et
une tige (9) ayant une extrémité proximale (10) et une extrémité distale (11), dans lequel la plaque métallique (8) est mobile par rapport à la tige (9),
la sangle d'arrêt de porte (6) étant configurée de telle sorte que lorsque la pédale (5) se déplace de la position haute vers la position basse, le câble de raccordement (7) tire la plaque métallique (8), initialement à proximité de l'extrémité distale (11), le long de la tige (9) en l'éloignant de l'extrémité distale (11) vers l'extrémité proximale (10), moyennant quoi la porte de conducteur (3) se déplace d'une position ouverte maximale vers une position fermée ou vers une position ouverte intermédiaire.

2. Système selon la revendication 1, dans lequel l'extrémité proximale (10) de la tige (9) comprend une boucle (12) destinée à être fixée à une carrosserie de véhicule et rotative par rapport à la tige (9), notamment rotative autour d'un axe sensiblement perpendiculaire à la tige (9).

3. Système selon la revendication 1 ou 2, dans lequel la tige (9) est agencée de manière à pénétrer dans une fente vide à l'intérieur de la porte de conducteur (3) et à s'y loger lorsque la plaque métallique (8) est tirée en s'éloignant de l'extrémité distale (11) vers l'extrémité proximale (10).

4. Système selon l'une quelconque des revendications 1 à 3, dans lequel la plaque métallique (8) possède une ouverture (14) à travers laquelle passe la tige (9), la sangle d'arrêt de porte (6) comprenant des rouleaux (15) agencés dans l'ouverture (14) entre la tige (9) et la plaque métallique (8).

5. Système selon l'une quelconque des revendications 1 à 4, dans lequel la tige (9) comprend une région creuse (25) de sorte que le câble de raccordement (7) entre dans la tige (9) par la région creuse (25) depuis une extrémité et est fixé à la plaque métallique (8).

6. Système selon l'une quelconque des revendications précédentes, dans lequel la pédale (5) est fixée à une extrémité (16) d'un élément pivotant (17) pouvant pivoter autour d'un axe de pivotement (18) et le câble de raccordement (7) est fixé à l'autre extrémité (19) de l'élément pivotant (17).

7. Système selon l'une quelconque des revendications précédentes, configuré de telle sorte que le câble de raccordement (7) reste en tension quelle que soit la position de la porte de conducteur (3) et de la pédale (5).

8. Système selon l'une quelconque des revendications précédentes, dans lequel la pédale (5) a une hauteur par rapport au plancher (20) d'une cabine (2) du véhicule (1), dans la position haute, lorsque la porte de conducteur (3) est dans la position ouverte maximale, égale à a + *h,* la hauteur d'une pédale d'accélération (21) du véhicule (1), dans une position initiale, par rapport au plancher (20) étant égale à a.

9. Système selon la revendication 8, dans lequel la pédale (5), dans sa position basse, lorsque la porte de conducteur (3) est dans la position fermée ou dans ladite position ouverte intermédiaire, a une hauteur égale à a.

10. Système selon l'une quelconque des revendications précédentes, dans lequel la pédale (5) est un repose-pied.

11. Système selon l'une quelconque des revendications précédentes, dans lequel le câble de raccordement (7) est choisi dans le groupe comprenant un câble rigide, un câble flexible, une tige métallique, un objet rigide.

12. Système selon l'une quelconque des revendications précédentes, dans lequel le système d'assistance (4) est configuré de sorte que lorsque la porte de conducteur (3) est fermée, la pédale (5) est déplacée de la position haute vers la position basse et lorsque la porte de conducteur (3) est ouverte, la pédale (5) est déplacée de la position basse vers la position haute.

13. Véhicule lourd (1), tel qu'un camion, un autobus et un engin de chantier, comprenant une porte de conducteur (3) et le système d'assistance (4) selon l'une quelconque des revendications précédentes.
